(19) **Europäisches Patentamt**
**European Patent Office**
**Office européen des brevets**

(11) **EP 3 008 768 B1**

(12) **EUROPÄISCHE PATENTSCHRIFT**

(45) Veröffentlichungstag und Bekanntmachung des Hinweises auf die Patenterteilung:
**19.04.2017 Patentblatt 2017/16**

(51) Int Cl.:
*H01M 4/62* (2006.01)  *H01M 4/13* (2010.01)
*H01M 10/0525* (2010.01)  *H01M 4/04* (2006.01)
*H01M 4/131* (2010.01)  *H01M 4/1391* (2010.01)
*H01M 4/02* (2006.01)

(21) Anmeldenummer: **14731190.6**

(22) Anmeldetag: **10.06.2014**

(86) Internationale Anmeldenummer:
**PCT/EP2014/061982**

(87) Internationale Veröffentlichungsnummer:
**WO 2014/198696 (18.12.2014 Gazette 2014/51)**

(54) **LITHIUM-IONEN-ZELLE FÜR EINE SEKUNDÄRBATTERIE**

LITHIUM-ION CELL FOR A SECONDARY BATTERY

PILE LITHIUM-ION POUR BATTERIE SECONDAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2013 DE 102013106114**

(43) Veröffentlichungstag der Anmeldung:
**20.04.2016 Patentblatt 2016/16**

(73) Patentinhaber: **Heraeus Quarzglas GmbH & Co. KG**
**63450 Hanau (DE)**

(72) Erfinder:
• **NEUMANN, Christian**
  **35410 Hungen (DE)**
• **BECKER, Jörg**
  **61194 Niddatal (DE)**
• **PIHAN, Sascha**
  **63743 Aschaffenburg (DE)**
• **OTTER, Matthias**
  **48155 Münster (DE)**

(74) Vertreter: **Staudt, Armin Walter**
**Sandeldamm 24a**
**63450 Hanau (DE)**

(56) Entgegenhaltungen:
WO-A1-2013/054481    DE-A1-102010 005 954
US-A1- 2005 169 829    US-A1- 2010 035 141
US-A1- 2012 070 717    US-B1- 7 572 551

• **BIRTE JACHE ET AL: "Towards commercial products by nanocasting: characterization and lithium insertion properties of carbons with a macroporous, interconnected pore structure", JOURNAL OF MATERIALS CHEMISTRY, Bd. 22, Nr. 21, 1. Januar 2012 (2012-01-01), Seite 10787, XP055129480, ISSN: 0959-9428, DOI: 10.1039/c2jm30787a**
• **HU Y-S ET AL: "SYNTHESIS OF HIERARCHICALLY POROUS CARBON MONOLITHS WITH HIGHLY ORDERED MICROSTRUCTURE AND THEI APPLICATION IN RECHARGEABLE LITHIUM BATTERIES WITH HIGH-RATE CAPABILITY", ADVANCED FUNCTIONAL MATERIALS, WILEY - V C H VERLAG GMBH & CO. KGAA, DE, Bd. 17, Nr. 12, 13. August 2007 (2007-08-13), Seiten 1873-1878, XP001507292, ISSN: 1616-301X, DOI: 10.1002/ADFM.200601152**

**Beschreibung**

Technisches Gebiet

Die vorliegende Erfindung betrifft eine Lithium-Ionen-Zelle für eine Sekundärbatterie mit einerElektrode, aufweisend eine Aktivmaterialschicht, in der Aktivmaterial-Teilchen in Kontakt mit einem nicht-wässrigen Elektrolyten und einem partikelförmigem, porösen Additiv enthalten sind, wobei der Volumenanteil des Additivs in der Aktivmaterialschicht im Bereich von 2 bis 40 % liegt.

Im Zuge der Entwicklung mobiler Energiespeicher steigt die Nachfrage nach wiederaufladbaren Batterien ("Akkumulatoren" oder "Sekundärbatterien"). Grundlegende Anforderung ist dabei eine möglichst hohe gravimetrische und volumetrische Energiedichte. Insbesondere für kommerzielle Anwendungen sollen die Elektrodenmaterialien außerdem preiswert, nicht toxisch, nicht explosiv und leicht zu verarbeiten sein.

Sekundärbatterien bestehen - wie auch Primärbatterien - aus einer oder aus mehreren Zellen, bei denen jeweils eine Kathode (positive Elektrode) von einer Anode (negative Elektrode) mittels Separator räumlich und elektrisch voneinander getrennt ist. Die Umwandlung der gespeicherten chemischen in elektrische Energie beruht auf elektrochemischer Redoxreaktion und dem damit einhergehenden Transport von Ionen zwischen den Elektroden. Für diese Ionen muss der Separator durchlässig sein.

Zunehmend werden Lithium-Sekundärbatterien eingesetzt. Bei diesen besteht die Anode beispielsweise aus einem porösen Kohlenstoffgerüst, das zur reversiblen Einlagerung und Auslagerung (Interkalation und Deinterkalation) von Lithiumionen geeignet ist. Die Kathode besteht in der Regel aus Metalloxiden, die ebenfalls zur Aufnahme von Li+-Ionen beim Entladevorgang geeignet sind. Sowohl die Anodeals auch die Kathode enthalten einen metallischen Stromanschluss als Stromsammler beziehungsweise Stromableiter in Kontakt mit einer Schicht mit dem Aktivmaterial. Diese Schicht wird hier auch als "Aktivmaterialschicht" bezeichnet.

Als Separator-Material kommen häufig mikroporöse Membranen aus Kunststoff (Polyethylen (PE) oder Polypropylen (PP)) oder aus Keramik zum Einsatz.

Der Elektrolyt dient als Ionentransportmedium sowohl im Separator und auch innerhalb der Elektroden selbst. Da das Standardpotential von metallischem Lithium (-3,04 V) kleiner ist als das von Wasserstoff (0 V), müssen nichtwässrige Elektrolyten verwendet werden. Gängig sind Polymerelektrolyte oder aprotische Elektrolytlösungen, wie etwa 1-molare $LiPF_6$-Lösung in einer Mischung aus 1:1 Ethylencarbonat: Dimethylcarbonat. Grundsätzlich ist die Leitfähigkeit derartiger Elektrolyte jedoch geringer als die eines wässrigen Elektrolyten, was zu einer geringeren Leistung der Zelle führt.

Um diesen Nachteil einzudämmen und die Wege für den Ionentransport kurz und den Innenwiderstand klein zu halten, werden Lithium-Ionen-Zellen mit vergleichsweise dünnen Aktivmaterialschichten und Separatoren ausgestattet. Die Gesamtschichtdicke einer Zelle liegt in der Regel bei weniger als 300 $\mu$m. Dies geht aber mit einer geringeren Energiedichte der Zelle einher.

Die volumetrische und gravimetrische Energiedichte können erhöht werden, indem der Anteil des Aktivmaterials erhöht wird. Das nicht von Aktivmaterial-Teilchen belegte Hohlraumvolumen macht bei Lithiumionen-Zellen daher nur etwa 15 bis 25% des Gesamtvolumens aus. Diese vergleichsweise niedrige Porosität geht wiederum mit einer geringeren Ionenmobilität einher.

Zur Elektrodenfertigung werden Pulver- oder Pasten aus dem jeweiligen Elektrodenmaterial als dünne, einfache Schicht auf einer metallischen Folie aufgebracht. Das Metall dient als Stromanschluss der jeweiligen Elektrode. Zusammen mit der Metallfolie wird das Elektrodenmaterial beheizten Kalanderwalzen zugeführt und dabei verpresst. Bei diesem "Kalandriervorgang" wird die Dichte der Aktivmaterialschicht erhöht. Er führt zu einer Optimierung der volumetrischen Energiedichte, er ist aber auch notwendig, um reproduzierbar eine örtlich konstante Elektrodendicke und eine hohe mechanische Festigkeit zu gewährleisten. Die Elektrodenmaterialschichten werden getrocknet und anschließend entweder einzeln auf Maß gebracht und zusammen mit einem Separator zu einer Zelle verarbeitet, oder die entsprechenden Folien werden als Anode-Separator-Kathode-Stapel von der Rolle laminiert und erst dann zugeschnitten oder ausgestanzt. Abschließend erfolgen die Zugabe eines Elektrolyten und die Versiegelung.

Stand der Technik

Es wurde eine Vielzahl von Konzepten vorgeschlagen, die auf eine Erhöhung der Porosität und eine Verbesserung der Ionen-Mobilität und damit auf Verkürzung der Ladedauer und Vermeidung lokaler Erhitzungen abzielen.

Dabei wurde zunächst die mit massentauglichen Einfachbeschichtungsverfahren erzielbare homogene Schichtdicke aus ökonomisch machbare Grenze angesehen und deren Optimierung für die jeweilige Anwendung betrieben (Venkat Srinivasan, John Newman; "Design and Optimization of a Natural Graphite/Iron Phosphate Lithium-Ion Cell" in "Journal of The Electrochemical Society (09/2004); 151 (10); A1530-A1538). Erst neuerdings befassen sich Veröffentlichungen auch mit der Erzeugung einer geometrisch inhomogenen Porosität durch Mehrfachbeschichtungen entweder unter Einsatz unterschiedlich starker Kalandrierungsprozesse (Ramadesigan, Venkatasailanathan et al. "Optimal Porosity Distribution for Minimized Ohmic Drop Across a Porous Electrode." Journal of The Electrochemical Society (2010); 157 (12) A1328-A1334) oder mittels Dünnschichttechnik in Verbindung mit 3D-strukturierten Kalandrierungsverfahren (WO 2013/009457 A2).

In der US 2004/131934 A1 wird empfohlen, in der Aktivmaterialschicht mesoporöse Agglomerationen aus Aktivmaterial-Teilchen zu erzeugen, die im Wesentlichen oder ausschließlich als Nanopartikel vorliegen. Dadurch soll ein dreidimensionaler netzwerkartiger Rahmen mit großer Oberfläche und hoher elektrochemischer Kinetik erhalten werden.

Ein ähnlicher Vorschlag ergibt sich aus der US2008/0038638. Demnach soll durch Einkapseln der Aktivmaterialteilchen der Anode in einer porösen elektrisch leitenden Matrix eine höhere Porosität erreicht werden. Die poröse Matrix dient außerdem zur Kompensation der beträchtlichen Volumenerhöhung bei der Interkalation von Li-Ionen während des Ladevorgangs.

Aus demselben Grund wird in der US 2008/0096110 A1 vorgeschlagen, das für Volumenänderungen besonders anfällige Aktivmaterial der Anode in die Poren eines porösen Substrats aus elektrisch leitfähigem Material einzubetten. Das Substrat ist beispielsweise ein metallischer Schwamm aus Nickel, Kupfer oder Titan, beziehungsweise ein kohlenstoffimprägniertes Textil oder Papier.

Die dabei in der Aktivmaterialschicht vorgesehenen Strukturen sind mehr oder weniger filigran und widerstehen dem Kalandrieren nicht oder mit nur eingeschränkter Funktionalität. Auf das Kalandrieren kann aber nicht verzichtet werden, um die gewünschte hohe volumetrische Energiedichte und vorgegebene sehr geringe Fertigungstoleranzen bei der Elektrodenherstellung einhalten zu können.

Eine andere Ausführung einer Aktivmaterialschicht ist in der US 2010/0035141 A1 beschrieben, aus der auch eine gattungsgemäße Lithium-Ionenzelle bekannt ist. Hierbei sind in der Aktivmaterialschicht neben Aktivmaterialpartikeln und dem Elektrolyten weitere Komponenten enthalten, darunter insbesondere hohle sphärische oder längliche Teilchen mit einer maximalen Abmessung von weniger als 20 $\mu$m. Diese hohlen Teilchen werden als "Perkolationsadditiv" bezeichnet. Sie bestehen aus hohlen Mikrokugeln oder Hohlfasern aus Glas, Keramik oder Kunststoffen. Weiterhin enthält die Aktivmaterialschicht zur Verbesserung der elektrischen Leitfähigkeit kleine Kohlenstoffpartikel, sogenannten Leitruß.

Die als Perkolationsadditiv zugesetzten Teilchen lockern die dichte Packung der Aktivmaterial-Teilchen auf, auch wenn diese eine geringe Teilchengröße haben. Darüber hinaus können die Hohlräume der Teilchen als Wärmereservoir dienen. Durch Einsatz derartiger Diffusionsadditive in der Aktivmaterialschicht kann daher auch bei einem hohen Anteil an Aktivmaterial eine hohe Ionenmobilität aufrechterhalten und eine gute Wärmeaufnahme gewährleistet werden.

In der US 2012/0094173 A1 wird ein Elektrodenmaterial aus makroporösem Graphit für eine Lithium-Ionen-Sekundärbatterie beschrieben. Der Mikroporenanteil an der Gesamt-Oberfläche liegt zwischen 0 und 0,74. Außerdem ist das Flächenverhältnis zweier bestimmter Raman-Absorptionsbanden zueinander definiert, wobei dieses Flächenverhältnis den Graphitisierungsgrad repräsentieren soll. Die Herstellung des makroporösen Graphits erfolgt über ein Templatverfahren unter Einsatz eines $SiO_2$-Templats. Dieses wird durch Pressen von $SiO_2$-Teilchen geformt, die nasschemisch erzeugt worden sind. Die Graphitisierungs-Temperatur ist relativ niedrig; sie liegt zwischen 900 und 1500 °C. Zur Herstellung der negativen Elektrode einer Lithium-Ionen-Batteriezelle wird der makroporöse Graphit zusammen mit Aktivmaterial, einem Binder und Leitmittel auf einer Kupferfolie aufgepresst.

Technische Aufgabenstellung

Die dabei als Perkolationsadditiv zugesetzten porösen Teilchen wirken wie eine "Verdünnung" des Aktivmaterials; sie reduzieren grundsätzlich die volumetrische Energiedichte. Die Teilchen sind entweder so hart, dass sie ohne weiteres dem Pressdruck beim Kalandrieren widerstehen (wie etwa Hohlkörper aus Glas oder aus Keramik), oder sie sind weich und plastisch verformbar (wie etwa Hohlsphären aus Kunststoff), deren Porosität sich beim Verpressen jedoch verringert.

Es besteht ein andauernder Verbesserungsbedarf für Lithium-Ionen-Zellen, insbesondere hinsichtlich ihrer gravimetrischen und volumetrischen Energiedichte und der kostengünstigen und reproduzierbaren Herstellung. Dabei ist sicherzustellen, dass die gewünschten Eigenschaften der Aktivmaterialschicht durch das Verdichten beim Kalandrieren nicht unakzeptabel verändert werden.

Allgemeine Beschreibung der Erfindung

Diese Aufgabe wird erfindungsgemäß durch eine Lithium-Ionen-Zelle mit den in Anspruch 1 genannten Merkmalen gelöst, bei der ausgehend von der eingangs genannten Zelle als Additiv poröse Kohlenstoffpartikel eingesetzt werden, deren Porosität im Bereich zwischen 50% und 95% liegt und die fluidisch miteinander verbundene Makroporen aufweist, die von Kohlenstoff-Wandungen mit einer mittleren Wandstärke im Bereich von 5 bis 500 nm begrenzt sind.

Vom Perkolationsadditiv aus dem Stand der Technik unterscheiden sich die erfindungsgemäß eingesetzten Kohlenstoffpartikel durch ihre chemische Zusammensetzung, die elektrische Leitfähigkeit und durch die Art ihrer Porosität. Das Volumen der Kohlenstoffpartikel wird zum großen Teil oder sogar überwiegend von Makroporen gebildet, die fluidisch miteinander verbunden sind. Sie haben eine offene Porosität und sind netzwerkartig und dreidimensional von Poren und Porenkanälen durchzogen, so dass der Porenraum an unzähligen Stellen offen an der Partikel-Oberfläche endet.

Im Vergleich zu Mikro- oder Mesoporen zeigen Makroporen einen geringeren Grad an Ionen-Mobilität behindernden geometrischen Effekten. Dazu gehören die sogenannte "Tortuosität" und die "Konstriktivität"

Unter Tortuositätit wird der Grad der Gewundenheit der Transportwege verstanden. Dieser wird sowohl durch den Anteil an Makroporen als auch durch das Kanalsystem bestimmt, über das die Makroporen miteinander verbunden sind.

In ähnlicher Weise wirkt sich auch ein großer Anteil an Makroporen auch die lokale Konstriktivität aus, die den Widerstand der Poren gegen Diffusionsprozesse beschreibt und die vom Verhältnis der Größe der diffundierenden Teilchen und dem Porendurchmesser abhängt. Die Konstriktivität wird durch einen hohen Anteil an Makroporen erhöht und dadurch die Ionen-Mobilität verbessert.

Für die angestrebte diffusionsverbessernde Wirkung ist somit ein Grad an Makroporosität innerhalb der Aktivmaterialschicht erforderlich. Diese wird von den darin verteilten Kohlenstoffpartikeln lokal bereitgestellt.

Der Elektrolyt und die darin gelösten Aktivmaterial-Ionen können die Aktivmaterialschicht durch diese Partikel hindurch lokal relativ leicht und schnell durchdringen. Simulationsrechnungen zeigen, dass die Durchdringung derartiger Kohlenstoffpartikel mindestens um den Faktor 10 schneller erfolgt wie die Durchdringung anderer Bereiche der Aktivmaterialschicht. Diese Art der Porosität der Kohlenstoffpartikel führt zu einer insgesamt höheren Ionen-Mobilität innerhalb der Aktivmaterialschicht, das heißt, einem schnelleren Lade- und Entladevorgang. Daher kann bei gleicher elektrochemischer Performance die Aktivmaterialschicht bei der erfindungsgemäßen Lithium-Ionen-Zelle dicker ausgeführt sein als üblich, beispielsweise mit einer Dicke von 70 $\mu$m oder mehr. Dies vereinfacht die Zellherstellung und reduziert die die Herstellkosten.

Die in dieser Hinsicht geeigneten Makroporen haben eine Porengröße ab 0,05 $\mu$m. Kleinere Poren als 0,05 $\mu$m sind kaum vermeidlich; sie zeigen aber einen höheren Grad der oben erläuterten Wandeffekte und tragen aber zur Ionen-Mobilität wenig bei. Ein etwaiger Porenanteil mit maximalen Porenabmessungen von mehr als 5 $\mu$m ist in der Regel ebenfalls kaum zu vermeiden, erschwert aber die mechanische Einpassung in die Aktivmaterialschicht.

Eine weitere wesentliche Eigenschaft der Kohlenstoffpartikel ist ihr mechanisches Verhalten beim Kalandrieren. Die Kohlenstoffpartikel bestehen aus einem filigranen Kohlenstoffgerüst mit dünnen spröden Wandungen, die im Wesentlichen eine mittlere Wandstärke im Bereich von 500 nm nicht überschreiten und die bevorzugt im Bereich von 10 bis 100 nm liegt. Sie geben lokalem Druck leicht nach und werden dabei eingedrückt oder sie zerbrechen leicht. Da die Kohlenstoffpartikel von Porenraum durchzogen sind, behalten die eingedrückten Partikel und abgetrennten Bruchstücke ihre Porosität. Beim Kalandrieren der Aktivmaterialschicht wirken durch Kontakt mit anderen Partikeln lokal hohe Kräfte auf die Kohlenstoffstruktur, so dass diese entsprechend oberflächlich eingedrückt, zerbrochen oder abgeschert wird. Dabei erzeugte deformierte Partikel und Bruchstücke füllen verbleibende Hohlräume zwischen den anderen Teilchen aus. Aneinandergrenzende Bruchstücke der Kohlenstoffpartikel können unter Druck teilweise zu poröser Füllmasse rekombinieren. Durch "spröde Deformation", das heißt, ohne nennenswerte plastische oder elastische Verformung, passen sich die Kohlenstoffpartikel somit den anderen Teilchen der Aktivmaterialschicht an und füllen den vorhandenen Leerraum aus. Auf diese Weise wird eine optimale Auffüllung der Aktivmaterialschicht mit poröser Kohlenstoffmasse erreicht, wie sie mit keinem anderen bekannten Füllstoff erreichbar ist.

Ein besonderer Vorteil der spröden Deformation liegt darin, dass das anfängliche Porenvolumen der Kohlenstoffpartikel kaum geringer wird. Die damit verbundenen grundlegenden Funktionalitäten hinsichtlich beschleunigter Durchdringung und elektrischer Leitfähigkeit gehen deswegen nicht verloren.

Durch das Verpressen der Kohlenstoffpartikel und deren Deformation wird eine hohe Fülldichte in der Aktivmaterialschicht - wenn auch mit poröser Füllmasse - erzeugt. Die hohe Fülldichte hat folgende Vorteile:

1. Sie trägt zu einer erhöhten mechanischen Festigkeit der verpressten Schicht bei. Insbesondere ergeben sich dadurch eine höhere Zugfestigkeit und eine verbesserte Haftung der Aktivmaterialschicht mit ihrem Stromanschluss.

2. Die Kohlenstoffpartikel sind elektrisch leitfähig. Sie tragen zur elektrischen Leitfähigkeit der Aktivmaterialschicht bei, so dass auf den Zusatz von Leitruß verzichtet oder die ansonsten zuzusetzende Menge reduziert werden kann. Dadurch, dass die Kohlenstoffpartikel ihre Form beim Verpressen an die der Aktivmaterialteilchen anpassen, ergibt sich eine besonders gute elektrische Kontaktierung.

Die porösen Kohlenstoffpartikel wirken sich somit in mehrfacher Hinsicht vorteilhaft auf die Eigenschaften der Aktivmaterialschicht aus. Sie verbessern die Ionen-Mobilität, sie erhöhen die elektrische Leitfähigkeit und sie erhöhen die mechanische Festigkeit.

Das Gesamtporenvolumen der porösen Kohlenstoffpartikel liegt bevorzugt im Bereich von 0,5 bis 3,5 cm$^3$/g. Dabei ist das Porenvolumen makroporendominiert, was sich bei einer vorteilhaften Ausführungsform darin zeigt, dass die porösen Kohlenstoffpartikel Poren im Größenbereich von 50 nm bis 5 $\mu$m aufweisen, deren Anteil am Gesamtporenvolumen der porösen Kohlenstoffpartikel mindestens 70 %, besonders bevorzugt mindestens 80 % beträgt.

Die porösen Kohlenstoffpartikel haben vorzugsweise eine Härte, die gewährleistet, dass sie sich beim Verpressen im Kontakt mit den Aktivmaterial-Teilchen infolge des lokal einwirkenden Drucks oberflächlich deformieren und in Bruchstücke zerbrechen. Die porösen Kohlenstoffpartikel haben demnach eine geringere Härte als die Aktivmaterial-Teilchen, und können so infolge ihrer Deformation die Lücken zwischen den Aktivmaterial-Teilchen auffüllen und diese optimal elektrisch kontaktieren.

Entscheidend ist dabei die lokale Druckfestigkeit der Kohlenstoffpartikel.

Je größer der auf Makroporen zurückzuführende Anteil der Porosität der Kohlenstoffpartikel ist, umso vorteilhafter ist dies für die oben erläuterten Eigenschaften. Im Hinblick darauf weisen die Kohlenstoffpartikel eine möglichst hohe Porosität auf, die vorzugsweise im Bereich von 70 bis 90 % liegt.

Weiterhin hat es sich als günstig erwiesen, wenn mindestens ein Teil der porösen Kohlenstoffpartikel graphitisiert ist.

Zum Graphitisieren werden die Kohlenstoffpartikel über eine längere Zeit (beispielsweise mehrere Stunden) auf hohe Temperatur erhitzt (beispielsweise mehr als 2000 °C). Dabei wandelt sich die Struktur in kristallinen Graphit um, wodurch vorher vorhandene Mikroporen und der größte Teil der Mesoporen verschwinden. Es verbleiben nur die über Kanäle verbundenen Makroporen.

Die hohe Ionen-Mobilität erlaubt schnellere Lade- und Entladeprozesse oder eine Vergrößerung der Aktivmaterialschicht. Vorzugsweise hat die Aktivmaterialschicht eine Dicke von 75 $\mu$m oder mehr.

Dabei handelt es sich um eine vergleichsweise große Schichtdicke nach dem Kalandrieren.

Wie oben erläutert, macht sich der Einsatz poröser Kohlenstoffpartikel in der Aktivmaterialschicht besonders vorteilhaft bemerkbar, wenn die Kohlenstoffpartikel durch Druck und Kontakt mit den Aktivmaterial-Teilchen deformiert werden. Im Hinblick darauf ist eine Ausführungsform der erfindungsgemäßen Lithium-Ionen-Zelle besonders bevorzugt, bei der die Aktivmaterialschicht verpresst ist.

Das Verpressen der Aktivmaterialschicht geschieht im einfachsten Fall durch Kalandrieren.

Um die oben erläuterten vorteilhaften Wirkungen der porösen Kohlenstoffpartikel hinsichtlich Ionen-Mobilität, elektrischer Leitfähigkeit und mechanischer Festigkeit der Aktivmaterialschicht optimal zu entfalten, ist eine homogene Verteilung von Kohlenstoffpartikeln und Aktivmaterial-Teilchen vorteilhaft.

Im Hinblick hierauf hat es sich bewährt, wenn die Aktivmaterial-Teilchen einen mittleren Durchmesser $\Phi$A und die Kohlenstoffpartikel einen mittleren Durchmesser $\Phi$K haben, wobei das Verhältnis $\Phi$A/ $\Phi$K im Bereich von 0,25 bis 4 liegt.

Der Anteil der Kohlenstoffpartikel in der Aktivmaterialschicht liegt erfindungsgemäß im Bereich von 2 Vol.-% bis 40 Vol.-%. Die erfindungsgemäße Lithium-Ionen-Zelle zeigt im Vergleich zu einer ansonsten identischen Lithium-Ionen-Zelle, ohne den Einsatz der porösen Kohlenstoffpartikel als Diffusionsadditiv eine erhöhte gravimetrische und volumetrische Energiedichte.

Ausführungsbeispiel

Nachfolgend wird die Erfindung anhand eines Ausführungsbeispiels und einer Zeichnung näher erläutert. Im Einzelnen zeigt

**Figur 1** eine Lithium-Ionen-Zelle mit Anode, Kathode und Separator in schematischer Darstellung,

**Figur 2** eine rasterelektronenmikroskopische Aufnahme eines Kohlenstoffpartikels,

**Figur 3** eine rasterelektronenmikroskopische Aufnahme einer Aktivmaterialschicht nach dem Kalandrieren in einem Ausschnitt,

**Figur 4** ein Ergebnis einer Simulationsrechnung zur Diffusion in einer Aktivmaterialschicht, die makroporöse Kohlenstoffpartikel enthält,

**Figur 5** C-Ladekurven von Lithium-Ionen-Zellen mit unterschiedlichen Dicken der Aktivmaterialschicht gemäß der Erfindung im Vergleich mit der Ladekurve einer Standard-Zelle und

**Figur 6**     ein Diagramm zur Porengrößenverteilung der porösen Kohlenstoffpartikel.

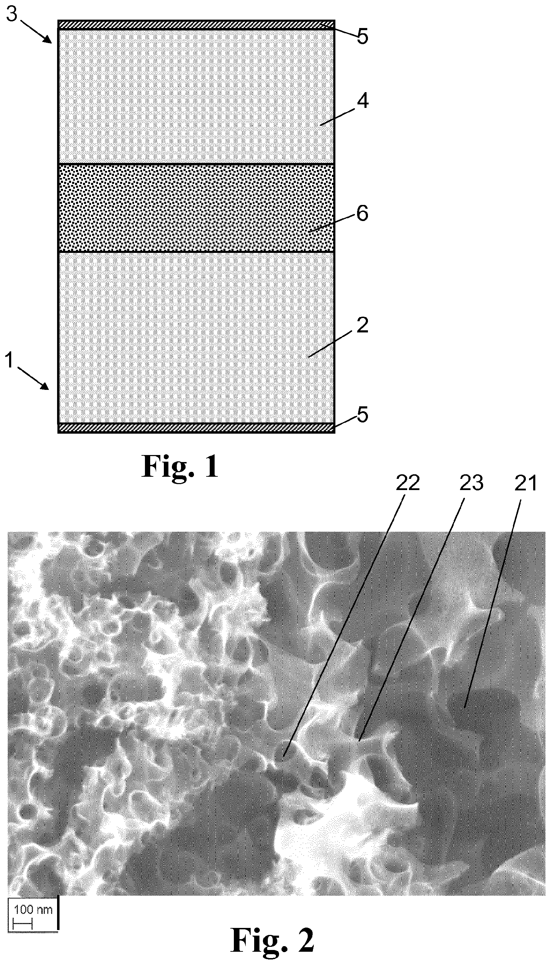

**Figur 1** zeigt schematisch eine Batteriezelle einer Lithium-Ionen-Batterie. In praxisüblichen Batterien können mehrere derartiger Batteriezellen elektrisch in Reihe oder parallel geschaltet sein.

Diese besteht im einfachsten Fall aus zwei miteinander verbundenen Halbzellen. Die positive Elektrode 1 wird als Kathode bezeichnet. Diese enthält eine Aktivmaterialschicht 2 mit Aktivmaterial aus einem Lithium-Schichtoxid, nämlich 1:1:1 Nickel-Mangan-Kobalt (NMC), das bei Entladung der Zelle reduziert wird. Die Aktivmaterialschicht 2 hat eine Dicke von 70 $\mu$m.

Die negative Elektrode 3 wird als Anode bezeichnet. Sie enthält eine Aktivmaterialschicht 4, die Aktivmaterial mit Lithium-interkalierten Graphit enthält, das bei Entladung der Zelle oxidiert wird. Die Aktivmaterialschicht 4 hat eine Dicke von 50 $\mu$m.

Zu jeder der Elektroden 1; 3 gehört ein Stromabnehmer 5, der bei der Kathode typischerweise aus Aluminium und bei der Anode aus Kupfer besteht.

Ein Separator 6 zwischen den beiden Elektroden 1; 3 angeordnet, um das positive Aktivmaterial von dem negativen Aktivmaterial elektrisch und räumlich zu trennen.

Der Separator 6 besteht aus einer gereckten, porösen Polymerfolie mit einer Dicke von 25 $\mu$m.

Die Aktivmaterialschichten 2; 4 und der Separator 6 sind von einem Elektrolyten gefüllt. Dabei handelt es sich um einen handelsüblichen Elektrolyten für Lithium-Ionen-Zellen, nämlich eine 1:1 Mischung von Ethylencarbonat (EC) und Dimethylcarbonat (DMC) mit einem Zusatz von Vinylcarbonat.

Die Aktivmaterialschichten 2; 4 beider Elektroden 1; 3 enthalten Aktivmaterialteilchen und poröse Kohlenstoffpartikel sowie fluoriertes Polymer als Binder.

Die Kohlenstoffpartikel haben eine sphärische Morphologie und einen mittleren Durchmesser von 25 $\mu$m. Die REM-Aufnahme von **Figur 2** zeigt ein derartiges Kohlenstoffpartikel in hoher Vergrößerung. Sie zeichnen sich durch eine offene Porosität aus, bei der Makroporen 21 über dreidimensionales Netzwerk von Kanälen 22 miteinander verbunden sind. Die Größe der Makroporen 21 liegt im Bereich von 0,1 bis 10 $\mu$m und sie sind von filigranen Wandungen 23 mit geringer Wandstärke um 10 nm begrenzt. Die Kanäle 22 haben eine Öffnungsweite um 1 $\mu$m. Etwas mehr als 80 % des Volumens der Kohlenstoffpartikel sind Porenraum. Eine Messung der spezifischen inneren Oberfläche nach der BET-Methode ergibt Messwerte um 50 m$^2$/g. Daraus ist plastisch die geringe Tortuosität der Kohlenstoffstruktur erkennbar, also der im Vergleich zu Gasrußen geringe Grad der Gewundenheit der Transportwege.

Das Porengerüst ist spröde und gibt bei lokal einwirkendem Druck leicht nach, wie etwa im Kontakt mit anderen Teilchen beim Kalandrieren der Aktivmaterialschicht. Dabei kann es auch zu Abscherungen und Bruchstücken kommen. Die dabei erzeugten spröde deformierten Partikel und Bruchstücke haben dieselbe Porosität wie das ursprüngliche Partikel. Sie verteilen sich im verbleibenden Leerraum der Aktivmaterialschicht und füllen diesen je nach Menge der Kohlenstoffpartikel und dem angelegten Druck mehr oder weniger aus.

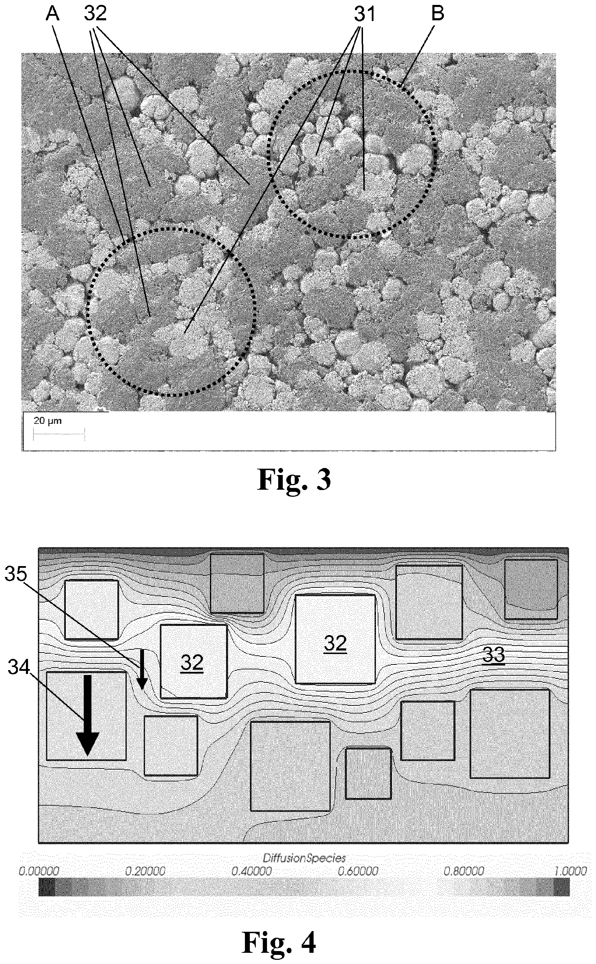

Dies zeigt exemplarisch die REM-Aufnahme von **Figur 3** als Draufsicht auf eine Aktivmaterialschicht nach dem Kalandrieren. Die Aktivmaterial-Teilchen 31 sind als hellgraue Flächen erkennbar. Sie bestehen aus den oben genannten Lithium-Schichtoxiden (1:1:1 Nickel-Mangan-Kobalt (NMC)) und haben eine mittlere Teilchengröße von etwa 15 $\mu$m mit im Wesentlichen sphärischer Morphologie.

Die Kohlenstoffpartikel 32 sind als dunkelgraue Flächen erkennbar. Diese Partikel sind größer als die Aktivmaterial-Teilchen, zeigen aber eine eher uneinheitliche Morphologie. Sie schmiegen sich an die Aktivmaterial-Teilchen 31 und füllen den zwischen den Teilchen vorhandenen Leerraum mehr oder weniger vollständig aus. Im Ausschnitt A ist die Auffüllung fast vollständig; im Ausschnitt B sind noch Lücken vorhanden.

Diese Struktur kommt durch spröde Deformation der Kohlenstoffpartikel zustande. Dabei erleiden die spröden Kohlenstoffpartikel 32 beim Verpressen der Aktivmaterialschicht oberflächliche Deformationen oder Brüche und schmiegen sich so in die vorhandenen Lücken zwischen den härteren Teilchen ein. Dabei wird die Porosität der Kohlenstoffpartikel und deren Bruchstücke nicht nennenswert verändert; diese Teilchen sind spröde. Sie verhindern eine vollkommen dichte Packung der kleinen Aktivmaterial-Teilchen 31 unter lokaler Erhöhung der Ionen-Mobilität innerhalb der Aktivmaterialschicht Sie tragen auch zur mechanischen Festigkeit der Schicht und zur elektrischen Leitfähigkeit bei. Dabei bewirkt das dreidimensionale Netzwerk der Makroporen besonders leichte und schnelle Durchdringung der Aktivmaterialschicht der Ionen beim Ladungstransport.

Der effektive Diffusionskoeffizient $D_{eff}$ für Teilchen in einem porösen Werkstoff hängt unter anderem von der Größe des Porenraums und von der Porenverteilung ab und lässt sich mathematisch wie folgt beschreiben:

$$D_{eff} = D_0 \times (\epsilon \times \delta / \tau)$$

$D_0$ repräsentiert den spezifischen Diffusionskoeffizienten für den Elektrolyten

ε ist die Porosität (dieser Wert ist kleiner als 1)

δ steht für die so genannte Konstriktivität der Porenstruktur (dieser Wert ist ebenfalls kleiner als 1)

τ bezeichnet die so genannte Tortuosität der Porenstruktur (dieser Wert ist typischerweise zwischen 2 und 5).

Der auf die Porosität zurückzuführende Anteil des effektiven Diffusionskoeffizienten wird durch den Faktor (ε x δ / τ) beschrieben. Alle Parameter dieses Faktors werden üblicherweise durch das Kalandrieren der Aktivmaterialschichten 2; 4 beeinflusst, und zwar in Richtung einer Verdichtung und damit einer Verringerung von $D_{eff}$. Allerdings ändert sich - wie oben beschrieben - die Porosität und die Porenverteilung innerhalb der erfindungsgemäß eingesetzten Kohlenstoffpartikeln nicht oder nur unwesentlich. Ihre Sprödigkeit und die Integrität des dreidimensionalen Netzwerk der Makroporen auch in Bruchstücken gewährleisten auch bei Auffüllung der Leerräume nach dem Verdichten eine besonders leichte und schnelle Durchdringung der Aktivmaterialschicht 2; 4 durch Ionen beim Ladungstransport.

**Tabelle 1** zeigt einen Vergleich der Parameter für Porosität ε, Tortuosität τ, und Konstriktivität δ bei der erfindungsgemäßen Aktivmaterialschicht und einer handelsüblichen Aktivmaterialschicht und den sich daraus nach obige Formel ergebenden Diffusionskoeffizienten $D_{eff}/D_o$:

**Tabelle 1**

| Aktivmaterialschicht | Porosität ε, | Tortuosität τ, | Konstriktivität δ | $D_{eff}/D_0$ |
|---|---|---|---|---|
| Standard-Mischung | 0,18 | 5 | 0,4 | 0,0144 |
| Erfindung | 0,8 | 2 | 1 | 0,4 |

Der Vergleich zeigt, dass sich bei der erfindungsgemäßen Aktivmaterialschicht infolge höherer Werte für Porosität, Tortuosität und Konstriktivität ein um den Faktor 27,8 höhere Diffusionskoeffizient für die Aktivmaterialschicht einstellt.

Diese Wirkung der porösen Kohlenstoffpartikel 32 ergibt sich auch aus Simulationsrechnungen. **Figur 4** zeigt eine Grafik zur Erläuterung der lokalen Änderung der Diffusionsgeschwindigkeit durch poröse Partikel innerhalb der Aktivmaterialschicht und deren Wirkung auf die Diffusionsgeschwindigkeit insgesamt.

Die porösen Kohlenstoffpartikel sind mit der Bezugsziffer 32 bezeichnet; die übrige Matrix der Aktivmaterialschicht mit 33. Die Kohlenstoffpartikel 32 und die Matrix 33 haben jeweils eine konstante Diffusionsgeschwindigkeit für Lithium-Ionen. In den Kohlenstoffpartikeln 32 ist die Diffusionsgeschwindigkeit um den Faktor 10 größer als in der Aktivmaterial-Matrix 33, wie durch die unterschiedliche Größe der Richtungspfeile 34 und 35 angedeutet. Die in der Grafik eingezeichneten Linien bezeichnen Bereiche mit gleichem Diffusionsfortschritt. Es zeigt sich, dass zum einen innerhalb der Kohlenstoffpartikel 32 die Diffusion - wie zu erwarten - schneller ist als in der Matrix, dass aber auch die Diffusionsgeschwindigkeit (35) in der Matrix 33 durch die Kohlenstoffpartikel 32 vergrößert wird, so dass sich insgesamt ein schnellerer Diffusionsfortschritt durch die Aktivmaterialschicht ergibt.

Diese Eigenschaft der Kohlenstoffpartikel 32 bewirkt daher eine insgesamt höhere Ionen-Mobilität innerhalb der Aktivmaterialschicht, das heißt, einem schnelleren Lade- und Entladevorgang. Daher kann bei gleicher elektrochemischer Performance die Aktivmaterialschicht bei der erfindungsgemäßen Lithium-Ionen-Zelle dicker ausgeführt sein als üblich, beispielsweise mit einer Dicke von 100 μm oder mehr. Dies vereinfacht die Zellherstellung und reduziert die die Herstellkosten.

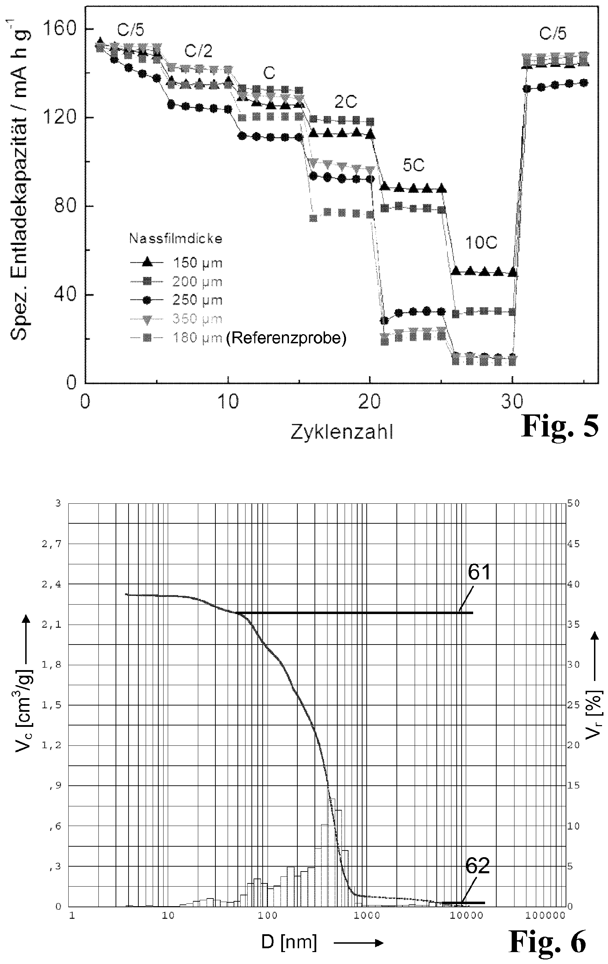

Dies unterstreichen auch die C-Ladekurven von **Figur 5**. Hierbei ist für auf der y-Achse die spezifische Ladekapazität einer Zelle in mAh/g gegen die Anzahl der Ladezyklen aufgetragen. Die Kurven zeigen Messergebnisse für fünf unterschiedliche Zellen, von denen eine eine Standardzelle ist, bei der die Aktivmaterialschicht keine Kohlenstoffpartikel enthält, und die vier anderen sich in der Dicke der jeweiligen Aktivmaterialschicht unterscheiden. In der Legende angegeben ist die Nassfilmdicke, wie sie nach dem Aufrakeln der jeweiligen Schichten gemessen wird. Die Messungen wurden aber an kalandrierten Schichten vorgenommen. Beim Kalandrieren verringert sich die Nassfilmdicke etwa um den Faktor 3. So hat beispielsweise die nach dem Rakeln 350 μm dicke Schicht nach dem Kalandrieren eine Trockenschichtdicke von 100 μm.

Die Laderate wurde jeweils alle 5 Messzyklen erhöht. Die Laderate ist in der Einheit "C" angegeben, wobei "1C" für eine Laderate steht, bei der die Zelle innerhalb einer Stunde komplett beladen ist. Bei einer Laderate von "2C" ist die Zelle innerhalb von 0,5 h komplett beladen usw. Die maximale Entladekapazität aller Batteriezellen liegt um 160 mA/g. Bei einer niedrigen Laderate von C/5 wird dieser Wert von allen Zellen erreicht. Das Messergebnis zeigt aber, dass die erfindungsgemäßen Zellen mit einem Anteil an Kohlenstoffpartikeln in der Aktivmaterialschicht auch bei hohen Laderaten von "2C" und höher noch eine im Vergleich zur Standardzelle deutlich höhere Entladekapazität erreichen. Dies gilt insbesondere für die Zellen mit einer Nassfilmdicke von 150 μm und 200 μm. Bei den dickeren Schichten setzt bei sehr hoher Laderate von 5C und 10C die größere Schichtdicke der erreichten Entladekapazität Grenzen. Zur Verifizierung des ordnungsgemäßen Zustandes der Zellen wurde zum Abschluss der Messung mit den Zyklen 30 bis 35 wieder die anfängliche, niedrige Laderate von "C/5" angewandt. Dabei zeigte sich, dass alle Zellen den ursprünglichen Werte der maximalen Entladekapazität wieder in etwa erreichen, mit Ausnahme der Zelle mit einer Rakelschicht-Dicke von 250 μm, deren Messergebnisse aufgrund eines Stabilitätsproblems als nicht repräsentativ angesehen werden können.

Das Herstellungsverfahren für die porösen Kohlenstoffpartikel zum Einsatz in einer Aktivmaterialschicht ist in der DE 10 2010 005 954 A1 beschrieben, deren diesbezüglicher Inhalt hiermit in die vorliegende Anmeldung einbezogen wird.

Dabei wird in einem ersten Schritt durch Hydrolyse oder Pyrolyse einer Ausgangsverbindung mittels eines Soot-Abscheideprozesses zunächst ein poröses Metalloxid-Templat aus agglomerierten oder aggregierten Metalloxid-Nanopartikeln erzeugt. Die Poren werden mit einer Kohlenstoff-Vorläufersubstanz infiltriert. Nach dem Carbonisieren wird das Templat durch Ätzen entfernt. Zurück bleibt ein poröses Kohlenstofferzeugnis mit hierarchischer Porenstruktur mit plättchen- oder flockenartiger Morphologie. Der Werkstoff ist unter dem Handelsnamen "Porocarb" der Heraeus Quarzglas GmbH & Co. KG bekannt.

Das Diagramm von **Figur 6** zeigt die Porengrößenverteilung bei einer graphitisierten Probe. Dabei werden die porösen Kohlenstoffpartikel auf eine Temperatur von mehr als 2000 °C erhitzt und bei dieser Temperatur mehrere Stunden gehalten, bis der Kohlenstoff in Graphit umgewandelt ist. Dabei verschwinden alle Mikroporen und der größte Teil der Mesoporen. Hierbei handelt es sich um eine im Sinne der Erfindung optimierte Ausführungsform der porösen Kohlenstoffpartikel.

Auf der linken Ordinate ist das kumulative Porenvolumen $V_c$ in [cm$^3$/g] und auf der rechten Ordinate das relative Porenvolumen $V_r$ in [%] gegen den Porendurchmesser D in [nm] aufgetragen. Es ist erkennbar, dass das Maximum der Porengrößenverteilung um 400 nm liegt und dass Poren mit Porengrößen oberhalb von 50 nm (Linie 62) und Poren mit einer Porengröße von weniger als 5000 nm (Linie 61) etwa 91 % (2,1/2,3 cm$^3$/g) des gesamten Porenvolumens ausmachen.

Die porösen Kohlenstoffpartikel werden auf eine mittlere Teilchengröße um 25 μm zerkleinert und zusammen mit anderen Komponenten zur Herstellung der Aktivmaterialschichten der Elektroden einer aufladbaren Lithium -Batterie mit folgender Rezeptur verwendet.

| | | |
|---|---|---|
| Kathoden-Aktivmaterial: | NMC111 (LiNiCoMnO2) | 90% Gew.-% |
| Poröse Kohlenstoffpartikel: | Porocarb LD2N | 3% Gew.-% |
| Leitadditiv: | Timcal Super P Li | 3% Gew.-% |
| Binder: | PVDF (als 5% Lösung in NMP) | 4% Gew.-%. |

Diese Komponenten werden in einem Schlicker homogenisiert und durch Aufrakeln in üblicher Art und Weise als Schicht auf einer metallischen Folie aufgebracht. Der Verbund aus Metallfolie und Schicht wird anschließend durch Trocknen und Kalandrieren verfestigt.

**Patentansprüche**

1. Lithium-Ionen-Zelle für eine Sekundärbatterie mit einer Elektrode, aufweisend eine Aktivmaterialschicht, in der Aktivmaterial-Teilchen in Kontakt mit einem nicht-wässrigen Elektrolyten und einem partikelförmigem, porösen Additiv enthalten sind, wobei der Volumenanteil des Additivs in der Aktivmaterialschicht im Bereich von 2 bis 40 % liegt, **dadurch gekennzeichnet, dass** als Additiv poröse Kohlenstoffpartikel eingesetzt werden, deren Porosität im Bereich zwischen 50% und 95% liegt und die fluidisch miteinander verbundene Makroporen aufweist, die von Kohlenstoff-Wandungen mit einer mittleren Wandstärke im Bereich von 5 bis 500 nm begrenzt sind.

2. Lithium-Ionen-Zelle nach Anspruch 1, **dadurch gekennzeichnet, dass** die Porosität der Kohlenstoffpartikel im Bereich von 70 bis 90 % liegt.

3. Lithium-Ionen-Zelle nach Anspruch 1 oder 2, **dadurch gekennzeichnet, dass** die Kohlenstoff-Wandungen eine mittlere Wandstärke im Bereich von 10 bis 100 nm haben.

4. Lithium-Ionen-Zelle nach einem der vorhergehenden Ansprüche, **dadurch gekennzeichnet, dass** die porösen Kohlenstoffpartikel ein Gesamtporenvolumen im Bereich von 0,5 bis 3,5 cm$^3$/g aufweisen.

**5.** Lithium-Ionen-Zelle nach einem der vorhergehenden Ansprüche, **dadurch gekennzeichnet, dass** die porösen Kohlenstoffpartikel Poren im Größenbereich von 50 nm bis 5 µm aufweisen, deren Anteil am Gesamtporenvolumen der porösen Kohlenstoffpartikel mindestens 70 %, vorzugsweise mindestens 80 % beträgt.

**6.** Lithium-Ionen-Zelle nach einem der vorhergehenden Ansprüche, **dadurch gekennzeichnet, dass** mindestens ein Teil der porösen Kohlenstoffpartikel graphitisiert ist.

**7.** Lithium-Ionen-Zelle nach einem der vorhergehenden Ansprüche, **dadurch gekennzeichnet, dass** die Aktivmaterialschicht eine Dicke von 75 µm oder mehr hat.

**8.** Lithium-Ionen-Zelle nach einem der vorhergehenden Ansprüche, **dadurch gekennzeichnet, dass** die Aktivmaterialschicht verpresst ist.

**9.** Lithium-Ionen-Zelle nach einem der vorhergehenden Ansprüche, **dadurch gekennzeichnet, dass** die Aktivmaterial-Teilchen einen mittleren Durchmesser ΦA und die Kohlenstoffpartikel einen mittleren Durchmesser ΦK haben und dass das Verhältnis ΦA/ ΦK im Bereich von 0,25 bis 4 liegt

**Claims**

**1.** A lithium ion cell for a secondary battery, the cell having a cathode, said cathode comprising an cathode active material layer containing active material particles and a particulate porous additive in contact with a nonaqueous electrolyte, whereby the proportion of the additive in the active material layer is. in the range of 2 vol.% to 40 vol.%, **characterized in that** porous carbon particles are used as the additive, the porosity thereof being in the range between 50% and 95% and comprising fluidically interconnected macropores which are defined by carbon walls with a mean wall thickness in the range of 5 nm to 500 nm.

**2.** Lithium ion cell according to claim 1, **characterized in that** the porosity of the carbon particles is in the range of 70% to 90%.

**3.** Lithium ion cell according to claim 1 or 2, **characterized in that** the carbon walls have a mean wall thickness in the range of 10 nm to 100 nm.

**4.** Lithium ion cell according to any one of the preceding claims, **characterized in that** the porous carbon particles have a total pore volume in the range of 0.5 to 3.5 cm$^3$/g.

**5.** Lithium ion cell according to any one of the preceding claims, **characterized in that** the porous carbon particles have pores in the size range of 50 nm to 5 µm, the proportion of which in the total pore volume of the porous carbon particles is at least 70%, preferably at least 80%.

**6.** Lithium ion cell according to any one of the preceding claims, **characterized in that** at least a part of the porous carbon particles is graphitized.

**7.** Lithium ion cell according to any one of the preceding claims, **characterized in that** the active material layer has a thickness of 75 µm or more.

**8.** Lithium ion cell according to any one of the preceding claims, **characterized in that** the active material layer is pressed.

**9.** Lithium ion cell according to any one of the preceding claims, **characterized in that** the active material particles have a mean diameter ΦA and the carbon particles have a mean diameter ΦK and that the ratio ΦA/ΦK is in the range of 0.25 to 4.

**Revendications**

**1.** Cellule lithium-ion pour une pile secondaire munie d'une électrode, présentant une couche de matière active, dans laquelle des particules de matière active en contact avec un électrolyte non aqueux et un additif particulaire poreux sont contenus, la fraction volumique de l'additif dans la couche de matière active étant située dans la plage de 2 à 40%, **caractérisée en ce que** des particules de carbone poreuses sont utilisées en tant qu'additif, dont la porosité est située dans la plage entre 50% et 95% et présente des macropores reliés entre eux fluidiquement, lesquels sont limités par des parois de carbone ayant une épaisseur de paroi moyenne située dans la plage de 5 à 500 nm.

2. Cellule lithium-ion selon la revendication 1, **caractérisée en ce que** la porosité des particules de carbone est située dans la plage de 70 à 90%.

3. Cellule lithium-ion selon la revendication 1 ou 2, **caractérisée en ce que** les parois de carbone ont une épaisseur de paroi moyenne située dans la plage de 10 à 100 nm.

4. Cellule lithium-ion selon l'une quelconque des revendications précédentes, **caractérisée en ce que** les particules de carbone poreuses présentent un volume total de pores situé dans la plage de 0,5 à 3,5 cm$^3$/g.

5. Cellule lithium-ion selon l'une quelconque des revendications précédentes, **caractérisée en ce que** les particules de carbone poreuses présentent des pores dans l'ordre de grandeur de 50 nm à 5 nm, dont la proportion par rapport au volume total de pores des particules de carbone poreuses est d'au moins 70%, de préférence d'au moins 80%.

6. Cellule lithium-ion selon l'une quelconque des revendications précédentes, **caractérisée en ce qu'**au moins une partie des particules de carbone poreuses est graphitée.

7. Cellule lithium-ion selon l'une quelconque des revendications précédentes, **caractérisée en ce que** la couche de matière active a une épaisseur de 75 $\mu$m ou plus.

8. Cellule lithium-ion selon l'une quelconque des revendications précédentes, **caractérisée en ce que** la couche de matière active est compressée.

9. Cellule lithium-ion selon l'une quelconque des revendications précédentes, **caractérisée en ce que** les particules de matière active ont un diamètre moyen $\Phi A$ et **en ce que** les particules de carbone ont un diamètre moyen $\Phi K$ et **en ce que** le rapport $\Phi A / \Phi K$ est situé dans la plage de 0,25 à 4.

**Fig. 1**

**Fig. 2**

Fig. 3

Fig. 4

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013009457 A2
- US 20040131934 A1
- US 20080038638 A
- US 20080096110 A1
- US 20100035141 A1
- US 20120094173 A1
- DE 102010005954 A1

**In der Beschreibung aufgeführte Nicht-Patentliteratur**

- **VENKAT SRINIVASAN ; JOHN NEWMAN.** Design and Optimization of a Natural Graphite/Iron Phosphate Lithium-Ion Cell. *Journal of The Electrochemical Society,* September 2004, vol. 151 (10), A1530-A1538
- **RAMADESIGAN ; VENKATASAILANATHAN et al.** Optimal Porosity Distribution for Minimized Ohmic Drop Across a Porous Electrode. *Journal of The Electrochemical Society,* 2010, vol. 157 (12), A1328-A1334